# EUROPÄISCHE PATENTSCHRIFT

(11) **EP 3 488 973 B1**
(45) Veröffentlichungstag und Bekanntmachung des Hinweises auf die Patenterteilung: **30.10.2024**
(21) Anmeldenummer: 18207507.7
(22) Anmeldetag: 21.11.2018
(51) Int. Cl.: B25B 27/10, B21D 37/04, B21D 39/04

(54) **WECHSELBACKE FÜR PRESSWERKZEUG**
CHANGE JAW FOR A PRESS TOOL
MÂCHOIRE DE REMPLACEMENT POUR OUTIL DE PRESSE

(30) Priorität: 23.11.2017 DE 102017127707
(43) Veröffentlichungstag der Anmeldung: 29.05.2019
(73) Patentinhaber: Viega Technology GmbH & Co. KG, 57439 Attendorn (DE)
(72) Erfinder: Rischen, Christian, 59889 Eslohne (DE); Faulstich, Markus, 65479 Raunheim (DE)
(74) Vertreter: Cohausz & Florack

(56) Entgegenhaltungen:
- EP-A2- 1 208 949
- EP-B1- 0 826 441
- DE-A1- 102004 045 156
- DE-C1- 4 419 862
- US-A1- 2012 042 710

## Beschreibung

Die Erfindung betrifft einen Aufsatz für eine Grundbacke eines Presswerkzeugs zum Verpressen von Fittings zur Herstellung von Rohrverbindungen, wobei zwei Grundbacken und zwei Aufsätze zusammen eine Pressbacke eines Presswerkzeugs bilden, mit einem Aufsatzkörper, mit einem am Aufsatzkörper ausgebildeten Pressabschnitt für ein Ausbilden einer Hälfte eines Backenmauls, das den Aufnahmebereich für den zu verpressenden Fitting bildet, und mit einem am Aufsatzkörper ausgebildeten Verbindungsabschnitt zum Verbinden mit der Grundbacke. Die Erfindung betrifft auch eine Grundbacke eines Presswerkzeugs zum Verpressen von Fittings zur Herstellung von Rohrverbindungen mit einem Grundbackenkörper, mit einer gelenkartigen Aufnahme für ein Verbinden mit einer weiteren Grundbacke und mit einen Wechselwirkungsabschnitt für eine Wechselwirkung mit einem Presswerkzeug. Die Erfindung betrifft auch ein System zum Verpressen von Fittings zur Herstellung von Rohrverbindungen.

Der für die vorliegende Erfindung relevante technische Bereich ist die baustellenseitige Installation von Rohrleitungssystemen, bei der allgemein für das Leiten und Führen eines Fluids ein aus Rohrabschnitten und Fittings bestehendes Rohrleitungssystem installiert wird. Als Fitting wird grundsätzlich ein Verbindungsstück einer Rohrleitung verstanden und wird am häufigsten zur Verbindung von zwei oder mehreren Rohrabschnitten eingesetzt. Das Fitting weist dementsprechend zwei oder mehr Pressabschnitte auf. Zu den häufigsten Fittings zählen gerade Verbindungen, Richtungswechsel in Form von Rohrbögen, Reduzierstücke, Abzweige wie T-Stücke oder Kreuzungen. Unter einem Fitting ist aber auch ein Rohranschluss einer Armatur oder einer sonstigen Komponente zu verstehen. Beispielsweise weisen Thermometer oder Manometer als Armaturen nur einen Anschluss für einen Rohrabschnitt auf. Somit weist dieser Fitting dann nur einen Pressabschnitt auf, um einen Rohrabschnitt an der Armatur anzuschließen.

Für das Verbinden der Rohrabschnitte mit den Fittings und sonstigen Komponenten werden Pressverbindungen genutzt, bei denen ein Pressabschnitt eines Fittings bei eingestecktem Rohrabschnitt mittels eines Presswerkzeugs radial nach innen so umgeformt wird, dass eine dauerhafte und dichte, gegebenenfalls sogar unlösbare Verbindung hergestellt wird. Die Fittings können dabei mit einem Dichtungsmittel, beispielsweise mit einem O-Ring, versehen sein, das die Dichtheit der Verbindung gewährleistet, oder auch mittels eines direkten Kontakts der Materialien des Rohrabschnitts und des Fittings, beispielweise metallisch dichtend ausgebildet sein.

Als Presstechnik für ein radiales Umformen des Pressabschnittes kommen rein radial wirkende Presssysteme als auch Presssysteme in Frage, die ein radial-axiales Verpressen nutzen, wobei während des Pressvorgangs ein Teil des Fittings axial verschoben wird, um dadurch ein radiales Umformen zu bewirken.

Die zuvor allgemein beschriebenen Rohrleitungssysteme dienen insbesondere einem Transport von Trink- oder Heizungswasser, von Gas zum Betrieb einer Heizungsanlage oder von Industriegasen.

Die eingangs beschriebenen Aufsätze für jeweils eine Grundbacke werden auch als Wechselbacken bezeichnet und werden baustellenseitig verwendet, um Fittings mit unterschiedlichen Nennweiten mit dem gleichen Presswerkzeug verpressen zu können. Dazu sind an den beiden Grundbacken, die eine Pressbacke bilden, austauschbare Aufsätze vorgesehen, die für die benötigten Nennweiten unterschiedlich große Backenmäuler ausbilden.

Die Aufsätze weisen dazu eine teilzylindrische bzw. halbzylindrische Form auf, die außenseitig einen Verbindungsabschnitt zum Verbinden mit einem korrespondierenden Verbindungsabschnitt der Grundbacke aufweisen. Die Innenkontur ist dann an die zu erreichende Nennweite angepasst. Das bedeutet, dass die Aufsätze für unterschiedliche Nennweiten in radialer Richtung unterschiedlich dick sind.

Die Grundbacke selbst bildet ebenfalls einen teilzylindrischen bzw. halbzylindrischen Verbindungsabschnitt aus, der zur Aufnahme der verschiedenen Aufsätze dient. Der distale Abschnitt der Grundbacke wird daher von dem Grundbackenkörper selbst gebildet und ist für alle Aufsätze mit verschiedenen Nennweiten gleich ausgebildet. Fittings mit unterschiedlichen Nennweiten benötigen aufgrund ihrer unterschiedlichen Größen unterschiedlich große Presskräfte. Daher müssen die Grundbacken, an denen die Aufsätze befestigt werden, für die maximale Presskraft der zu verwendenden Aufsätze ausgelegt sein. Dieses gilt insbesondere auch für die Außenkontur des distalen Abschnitts des Grundbackenkörpers, der den Verbindungsabschnitt umgibt. Dadurch wird die Baugröße der Grundbacke und somit auch der Kombination aus Grundbacke und Aufsatz durch die größte zu erzielende Presskraft bestimmt und ist für den Einsatz bei kleinen Nennweiten unverhältnismäßig groß. Daher kommt es bei der Verwendung von Wechselbacken beim Verpressen von Fittings mit kleinen Nennweiten zu Platzproblemen, so dass die Gefahr besteht, Fittings nicht sachgemäß verlegen und/oder verpressen zu können.

Zuvor beschriebene Aufsätze und Grundbacken sind in der EP 0 826 441 B1 offenbart. In der US 2012/042710 A1 ist ein Presswerkzeug offenbart, wobei unterschiedliche

Crimpeinsätze in Pressbacken einsetzbar sind. Dieses Dokument zeigt die Merkmale des Oberbegriffs der Ansprüche 1 und 7.

In der DE 44 19 862 C1 ist eine Montagezange offenbart, wobei an den Zangenbacken austauschbare Aufsatzstücke anbringbar sind.

In der EP 1 208 949 A2 ist ein Presswerkzeug offenbart, wobei die Pressbacken Presseinsätze aufweisen.

In der DE 10 2004 045156 A1 ist weiter ein Aufsatz für ein Presswerkzeug offenbart.

Daher liegt der vorliegenden Erfindung das technische Problem zugrunde, Aufsätze für Wechselbacken, Grundbacken und Systeme anzugeben, die einen verbesserten Einsatz für Fittings mit unterschiedlichen Nennweiten ermöglichen.

Das zuvor aufgeführte technische Problem wird erfindungsgemäß zunächst durch eine Grundbacke eines Presswerkzeugs zum Verpressen von Fittings zur Herstellung von Rohrverbindungen nach Anspruch 7 gelöst.

Erfindungsgemäß ist erkannt worden, dass der Aufsatz selber den gesamten distalen Abschnitt der zusammengesetzten Pressbacke bestehend aus Grundbacke und Aufsatz bildet und dass der Verbindungsabschnitt des Aufsatzes von der zylindrischen Form des Backenmauls gelöst wird. Die vom Verbindungsabschnitt gebildete Schnittstelle zur Grundbacke kann dadurch vom Bereich des Pressabschnitts entfernt angeordnet werden, so dass sich mehr Optionen für die Ausgestaltung der Aufsätze für unterschiedliche Nennweiten ergeben.

Durch die Verlagerung des Verbindungsabschnitts weg von dem Pressabschnitt ist es möglich, die Baugröße der miteinander verbundenen Grundbacke und Aufsatz, insbesondere die Außenkontur im Bereich des distalen Endes und des Verbindungsabschnitts, an die anzuwendende Presskraft anzupassen. Dadurch kann der Aufsatz für kleine Nennweiten insgesamt kleiner ausgebildet werden, so dass auch Fittings mit kleinen Nennweiten und engerer Anordnung beim Verlegen von Rohren und Armaturen in geeigneter Weise zuverlässig und einfach verpresst werden können.

In bevorzugter Weise ist der Pressabschnitt integral, also aus dem gleichen Material bestehend, bzw. integriert als separates Element mit dem Aufsatzkörper ausgebildet. Somit weist jeder Aufsatz einen festen Pressabschnitt auf und wird als Ganzes als Wechselbacke genutzt.

Des Weiteren entspricht die Pressfläche des Pressabschnitts jedes Aufsatzes, also die eigentliche Presskontur, in ihren Abmessungen einem Nennwert eines Außendurchmessers eines Fittings. Somit kann für jede Nennweite ein passender Aufsatz als Wechselbacke mit der Grundbacke verbunden werden.

Erfindungsgemäß bildet der Verbindungsabschnitt zumindest abschnittsweise eine im Wesentlichen ebene Schnittstelle zur Grundbacke. Die Ausbildung der Schnittstelle in einer im Wesentlichen ebenen Form wird dabei so verstanden, dass die Schnittstelle keine teilzylindrische oder halbzylindrische Form aufweist. Im Wesentlichen eben bedeutet weiterhin, dass die Schnittstelle nicht eine glatte ebene Form aufweisen muss, sondern gestuft ausgebildet sein kann und im Folgenden erläuterte Verbindungsmittel aufweist. Eine im Wesentlichen ebene Form bedeutet also eine nicht gekrümmte Form mit einer Längserstreckung.

Erfindungsgemäß weist der Verbindungsabschnitt Verbindungsmittel für eine formschlüssige, verdrehsichere und lösbare Verbindung mit der Grundbacke auf. Entsprechende Verbindungsmittel sind dann auch an der Grundbacke vorhanden, die somit matrizen- oder patrizenförmig ausgebildet sind. Dabei können die Verbindungsmittel gegenseitig durch eine einfache Bewegung miteinander in Eingriff gebracht werden, um ein leichtes Auswechseln von Aufsätzen an Grundbacken zu ermöglichen.

Erfindungsgemäß sind die Verbindungsmittel mittels einer Drehbewegung in Eingriff mit den an der Grundbacke ausgebildeten Verbindungsmitteln bringbar. Somit kann mittels einer einfachen Handbewegung ein Austausch von Aufsätzen durchgeführt werden.

Bei einer ersten bevorzugten Ausgestaltung der Verbindungsmittel weisen die Verbindungsmittel eine zylindrische Vertiefung zur Aufnahme eines an der Grundbacke ausgebildeten zylindrischen Stiftes oder einen zylindrischen Stift auf. Die alternative Formulierung soll dabei verdeutlichen, dass die Verbindungsmittel an dem Aufsatz und an der Grundbacke miteinander korrespondieren und wahlweise auf der einen oder anderen Seite ausgebildet sein können. Für das Anbringen und Lösen des Aufsatzes relativ zur Grundbacke reicht eine einfache manuelle Drehbewegung aus.

Die Verbindungsmittel können weiterhin ein hinterschnittenes Positionierungselement und ein Anschlagselement aufweisen. Das Positionierungselement und das Anschlagselement kommen mit den korrespondierenden Elementen an der Grundbacke in Eingriff und ermöglichen eine exakte Positionierung und gegebenenfalls auch Fixierung des Aufsatzes an der Grundbacke.

Bei einer zweiten bevorzugten Ausgestaltung der Verbindungsmittel weisen die Verbindungsmittel eine Einlaufschiene zur Führung mindestens eines an der Grundbacke ausgebildeten Positionierungselement und/oder Anschlagelements oder mindestens ein Positionierungselement und/oder Anschlagelement auf. Auch hierbei soll die alternative Formulierung eine wechselseitige Ausbildung der Verbindungsmittel sowohl an dem Aufsatz als auch an der Grundbacke kennzeichnen. Diese Ausgestaltung der Verbindungsmittel ermöglicht eine Auswechslung des Aufsatzes durch eine einfache lineare Schiebebewegung.

Zudem kann eine Fixierungsanordnung für ein lösbares Fixieren der Verbindungsmittel in der Eingriffsposition vorgesehen sein. Die Fixierungsanordnung kann dabei rein mechanisch beispielsweise durch ein gegenseitiges Verrasten oder mittels magnetischer Elemente die Fixierung bewerkstelligen.

Das oben aufgezeigte technische Problem wird auch durch eine Grundbacke eines Presswerkzeugs zum Verpressen von Fittings zur Herstellung von Rohrverbindungen gelöst, wobei erneut zwei Grundbacken eine Pressbacke eines Presswerkzeugs bilden. Dazu weist die Grundbacke einen Grundbackenkörper, eine gelenkartige Aufnahme für ein Verbinden mit einer weiteren Grundbacke und eine Wechselwirkungsabschnitt, beispielsweise eine Einlaufkontur für den Vortrieb eines Presskolbens, für eine Wechselwirkung mit einem Presswerkzeug auf. Die Aufnahme ist dabei bevorzugt eine Bohrung zur Aufnahme einer Drehachse der Pressbacke mit einer Halterung mit einer Drehachse oder mit zwei Drehachsen. Zunächst weist die Grundbacke einen distalen Verbindungsabschnitt zum Verbinden mit einem zuvor erläuterten Aufsatz auf und weiterhin ist der Verbindungsabschnitt zumindest abschnittsweise als eine im Wesentlichen ebene Schnittstelle komplementär zum Verbindungsabschnitt des Aufsatzes ausgebildet. Somit können verschiedene Aufsätze in einfacher Weise mit der Grundbacke verbunden werden, so das mit ein und der gleichen Grundbacke verschiedene Aufsätze verbunden werden können.

Besonders vorteilhaft ist dabei, wenn die Verbindungsmittel an jeder von zwei Grundbacken, die zu einem Paar von Grundbacken zu einer Pressbacke zusammengebracht werden, gleich ausgebildet sind und jeder Aufsatz mit seinen Verbindungsmitteln an jeder Grundbacke befestigt werden kann. Dadurch wird die Vereinfachung erreicht, dass ein Benutzer nicht auswählen muss, ob ein bestimmter Typ eines Aufsatzes an einem bestimmten Typ einer Grundbacke angebracht werden muss.

Das oben aufgezeigte technische Problem wird erfindungsgemäß auch durch ein System zum Verpressen von Fittings zur Herstellung von Rohrverbindungen, mit mindestens zwei Paaren von ebenfalls zuvor beschriebenen Aufsätzen und mit einem Paar von zuvor beschriebenen Grundbacken gelöst, wobei verschiedene Paare von Aufsätzen Pressabschnitte für Backenmäuler mit unterschiedlichen Nennweiten aufweisen und wobei die Paare von Aufsätzen gleiche Verbindungsabschnitte aufweisen. Die Vorteile eines solchen Systems sind bereits durch die vorige Beschreibung erläutert worden.

In bevorzugter Weise weisen die Aufsätze unterschiedlicher Paare von Aufsätzen ein an die Nennweite der auszubildenden Backenmäuler angepasste Baugröße und Außenkontur auf. Dabei stellt sich insbesondere die Möglichkeit, die Außenkontur anzupassen, als vorteilhaft heraus. Denn für kleine Nennweiten, also für das Verpressen von Fittings mit kleinen Abmessungen, kann der vom Aufsatz und insbesondere der vom distalen Abschnitt des Aufsatzkörpers eingenommene Bauraum gering gehalten werden. Somit ergeben sich in beengten Bereichen für das Verpressen von Fittings mit kleinen Abmessungen geringere Probleme.

Im Folgenden wird die Erfindung anhand von Ausführungsbeispielen mit Bezug auf die Zeichnung erläutert. In der Zeichnung zeigen
- Fig. 1: ein erstes Ausführungsbeispiel eines Aufsatzes in einer Seitenansicht,
- Fig. 2: den Aufsatz nach Fig. 1 in einer Ansicht von schräg vorne,
- Fig. 3: ein erstes Ausführungsbeispiel einer Grundbacke in einer Seitenansicht,
- Fig. 4: die Grundbacke nach Fig. 3 in einer Ansicht von schräg vorne,
- Fig. 5: eine Anordnung aus Aufsatz und Grundbacke während des Zusammenbaus,
- Fig. 6: ein zweites Ausführungsbeispiel eines Aufsatzes in einer Seitenansicht,
- Fig. 7: den Aufsatz nach Fig. 6 in einer Ansicht von schräg vorne,
- Fig. 8: ein zweites Ausführungsbeispiel einer Grundbacke in einer Seitenansicht,
- Fig. 9: die Grundbacke nach Fig. 8 in einer Ansicht von schräg vorne,
- Fig. 10: eine Anordnung aus Aufsatz und Grundbacke nach den Fig. 6 bis 8 während des Zusammenbaus,
- Fig. 11: die Anordnung nach Fig. 10 im zusammengefügten Zustand und
- Fig. 12: ein Ausführungsbeispiel eines Systems zum Verpressen von Fittings zur Herstellung von Rohrverbindungen.

In der nachfolgenden Beschreibung der verschiedenen erfindungsgemäßen Ausführungsbeispiele werden Bauteile und Elemente mit gleicher Funktion und gleicher Wirkungsweise mit denselben Bezugszeichen versehen, auch wenn die Bauteile und Elemente bei den verschiedenen Ausführungsbeispielen in ihrer Dimension oder Form Unterschiede aufweisen können.

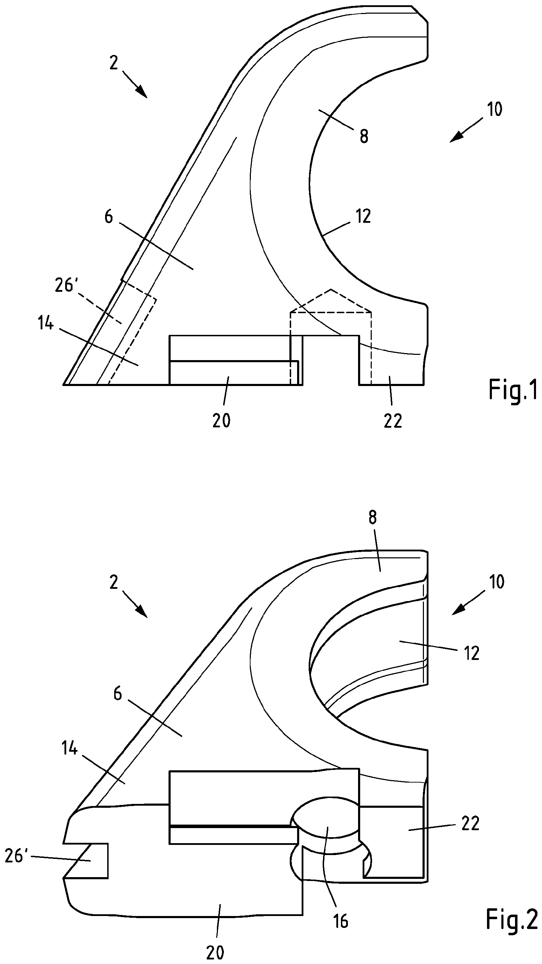

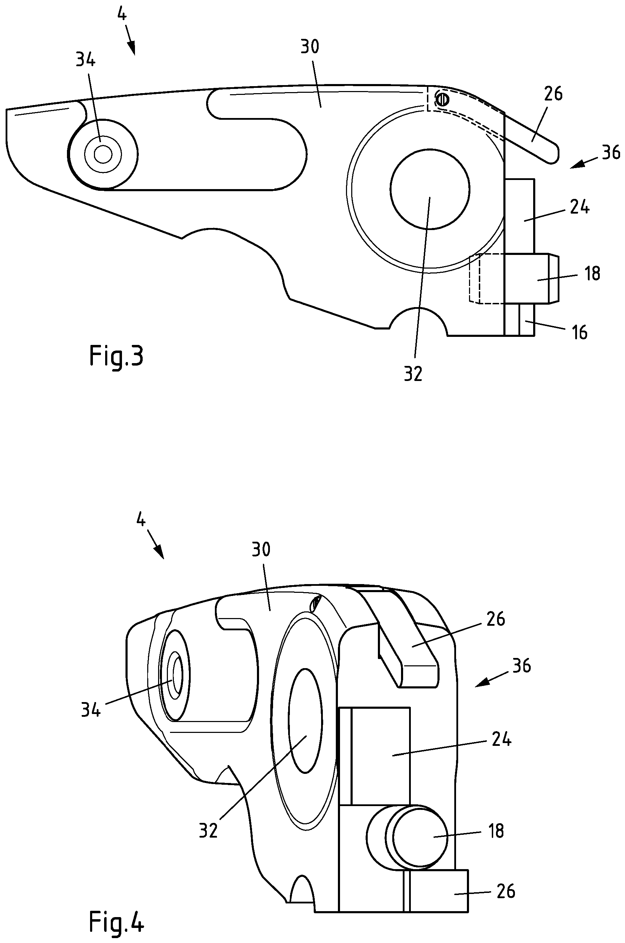

Die Fig. 1 und 2 zeigen ein erstes Ausführungsbeispiel eines erfindungsgemäßen Aufsatzes 2 für eine in den Fig. 3 und 4 gezeigten Grundbacke 4 eines Presswerkzeugs zum Verpressen von Fittings zur Herstellung von Rohrverbindungen. Dabei bilden jeweils zwei Grundbacken 4 zusammen mit zwei Aufsätzen 2 eine Pressbacke eines Presswerkzeugs.

Der Aufsatz 2 weist einen Aufsatzkörper 6 auf, an dem ein Pressabschnitt 8 für ein Ausbilden einer Hälfte eines Backenmauls 10 ausgebildet ist. Das Backenmaul 10 bildet den Aufnahmebereich für den zu verpressenden Fitting (nicht dargestellt), indem die innen liegende Pressfläche bzw. Presskontur 12 den Fitting aufnimmt, an diesem anliegt und bei Verpressen zumindest teilweise verformt. Des Weiteren ist am Aufsatzkörper 6 ein Verbindungsabschnitt 14 zum Verbinden mit der Grundbacke 4 ausgebildet.

Wie sich aus der Zusammenschau der Fig. 1 bis 5 ergibt, stellt der Aufsatzkörper 6 den gesamten distalen Abschnitt der zusammengesetzten Pressbacke bestehend aus Aufsatz 2 und Grundbacke 4 dar. Daher kann durch eine geeignete Ausgestaltung der Bauform des Aufsatzkörpers 6 der distale Abschnitt der Pressbacke so gestaltet werden, dass insbesondere bei Fittings mit kleinen Nennweiten die Handhabung der Pressbacke erleichtert wird.

Der Pressabschnitt 8 und der Verbindungsabschnitt 14 sind weiterhin beabstandet zueinander angeordnet. Somit ist die Schnittstelle zwischen dem Aufsatz 2 und der Grundbacke 4 von dem Pressabschnitt 8 getrennt angeordnet. Des Weiteren bildet der Verbindungsabschnitt 14 eine zumindest abschnittsweise im Wesentlichen ebene Schnittstelle zur Grundbacke 4.

Wie sich aus den Fig. 1 und 2 ergibt, ist der Pressabschnitt 8 integral mit dem Aufsatzkörper 2 ausgebildet. Jeder Aufsatz hat also einen vorgegebenen Pressabschnitt 8 mit einer Pressfläche bzw. Presskontur 12 mit vorgegebener Nennweite.

Wie im Weiteren erläutert wird, weist der Verbindungsabschnitt 14 Verbindungsmittel für eine formschlüssige, verdrehsichere und lösbare Verbindung mit der Grundbacke 4 auf. Diese Verbindungsmittel sind matrizen- bzw. patrizenförmig ausgebildet, korrespondieren also miteinander.

Bei dem in den Fig. 1 und 2 dargestellten Ausführungsbeispiel des Aufsatzes 2 sind die Verbindungsmittel mittels einer Drehbewegung in Eingriff mit den an der Grundbacke 4 ausgebildeten Verbindungsmitteln in Eingriff bringbar. Die Verbindungsmittel weisen dazu eine zylindrische Vertiefung 16 zur Aufnahme eines an der Grundbacke 4 ausgebildeten zylindrischen Stiftes 18 auf, siehe Fig. 3 und 4.

Des Weiteren weisen die Verbindungsmittel ein hinterschnittenes Positionierungselement 20 und ein Anschlagselement 22 auf, die mit einem korrespondierenden Positionierungselement 24 und einem hinterschnittenen Anschlagelement 26 an der Grundbacke zusammenwirken.

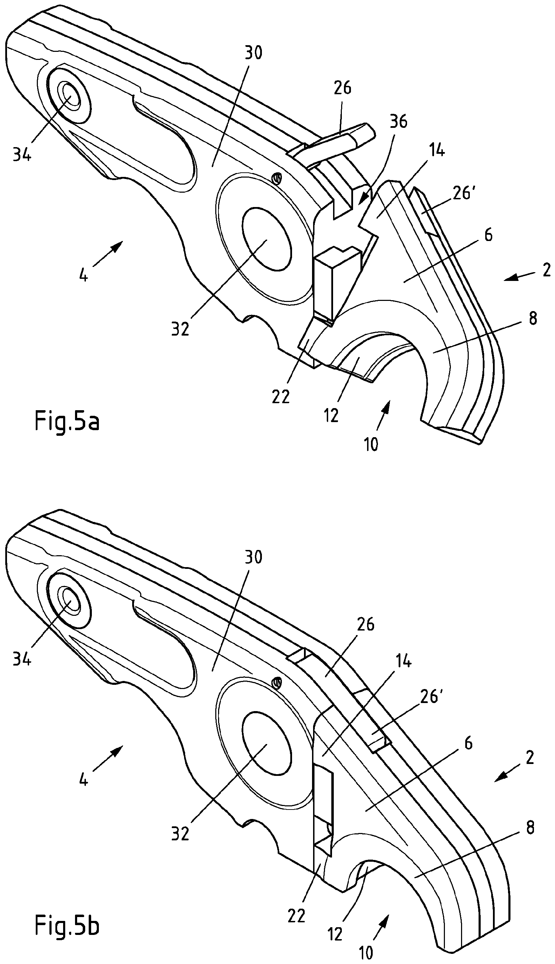

In Fig. 5 ist zu erkennen, wie durch Einsetzen des zylindrischen Stiftes in die zylindrische Vertiefung (beides verborgen) der Aufsatz 2 in einer verdrehten Position an der Grundbacke 4 angesetzt wird, um nachfolgend durch eine Drehung in die Endposition gebracht werden kann. Dadurch kommen die beschriebenen Verbindungsmittel in Eingriff miteinander und bewirken eine drehfeste Positionierung des Aufsatzes 2 auf der Grundbacke 4.

Schließlich ist noch eine Fixierungsanordnung mit einem an der Grundbacke 4 befestigten schwenkbaren Hebel 26 und einer am Aufsatzkörper 6 ausgebildeten Vertiefung 26' vorgesehen, die die Grundbacke 4 und den Aufsatzkörper 6 im zusammengefügten Zustand in der Eingriffsposition lösbar fixieren.

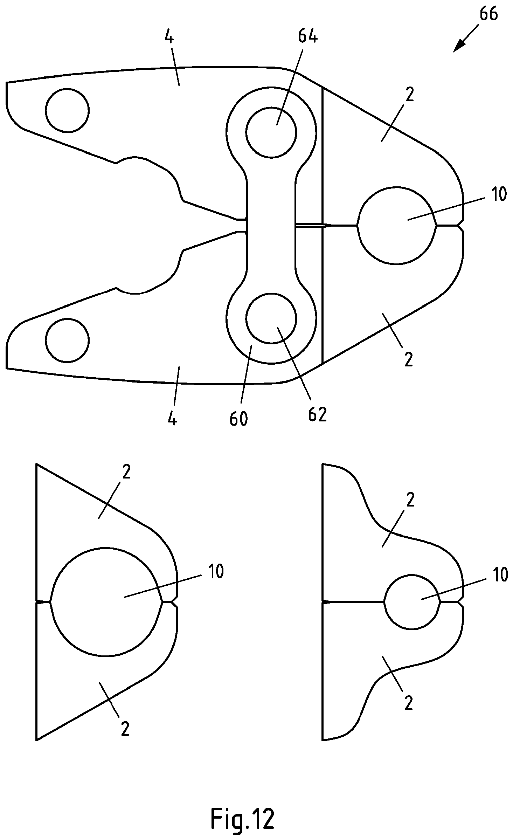

Die in den Fig. 3 und 4 dargestellte Grundbacke 4 eines Presswerkzeugs zum Verpressen von Fittings zur Herstellung von Rohrverbindungen weist über die bisher beschriebenen Merkmale hinaus einen Grundbackenkörper 30 mit einer gelenkartigen Aufnahme 32 für ein Verbinden mit einer weiteren Grundbacke 4, wobei die Aufnahme 32 als Bohrung zur Aufnahme einer Drehachse ausgebildet ist. Das Presswerkzeug weist dazu zwei Drehachsen oder nur eine Drehachse auf, die durch eine beidseitige Halterung befestigt sind. Ein detailliertere Beschreibung siehe unten mit Bezug auf Fig. 12.

Weiterhin weist der Grundbackenkörper 30 einen Wechselwirkungsabschnitt 34 auf, vorliegend als Bohrung ausgebildet, um über einen angelenkten Hebel (nicht dargestellt) bewegt zu werden. Der Wechselwirkungsabschnitt 34 ist für eine Wechselwirkung mit einem Presswerkzeug ausgebildet, der den beschriebenen Hebel bewegt.

Der Grundbackenkörper 30 weist einen Verbindungsabschnitt 36 zum Verbinden mit einem in den Fig. 1 und 2 dargestellten Aufsatz 2 auf, wobei der Verbindungsabschnitt 36 komplementär zum Verbindungsabschnitt 14 des Aufsatzes 2 ausgebildet ist und die bereits beschriebenen Elemente zylindrischer Stift 18, Positionierungselement 24 und Anschlagelement 26 aufweist.

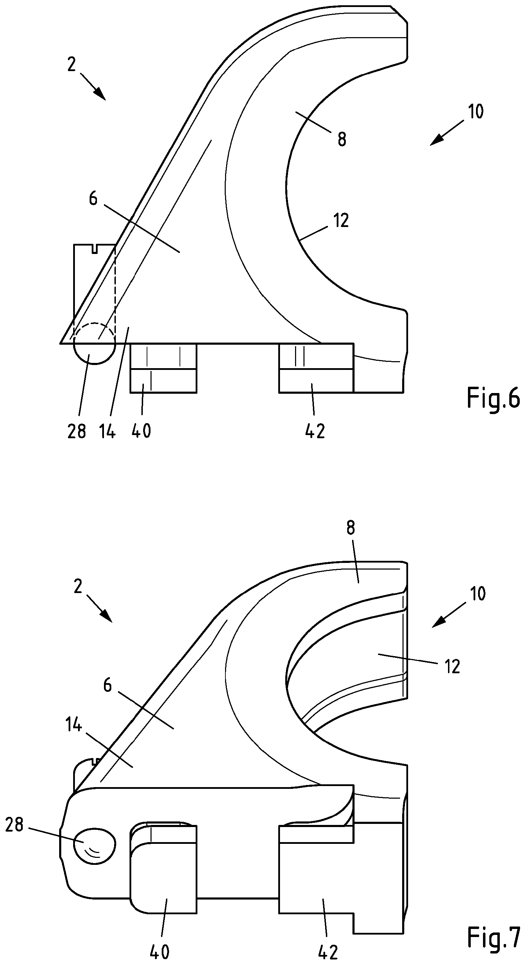

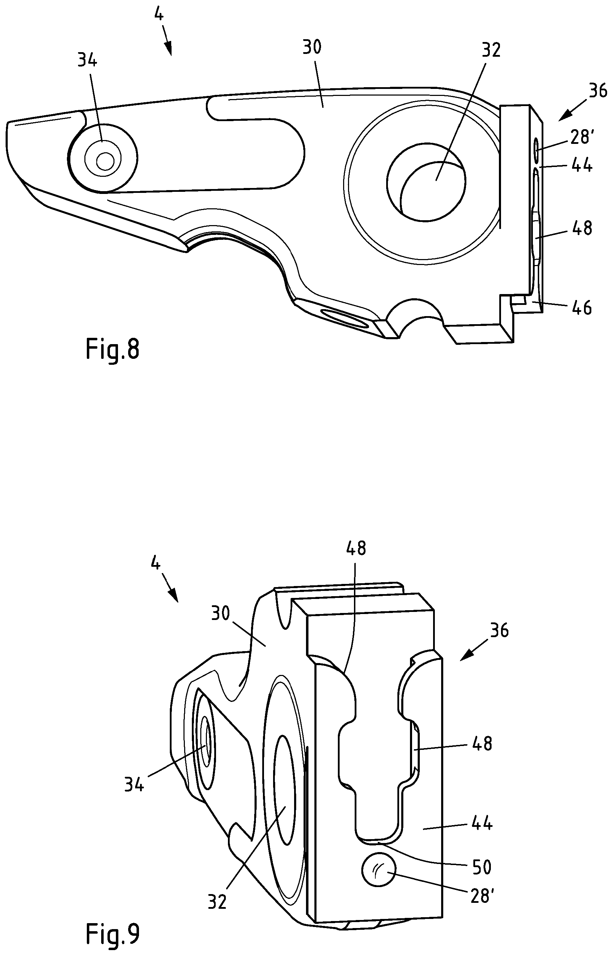

Die Fig. 6 bis 11 zeigen ein weiteres Ausführungsbeispiel eines Aufsatzes 2 und einer Grundbacke 4, wobei gleiche Bezugszeichen gleiche Elemente bezeichnen, wie sie zuvor anhand der Fig. 1 bis 5 beschrieben worden sind.

Bei diesem Ausführungsbeispiel können die Verbindungsmittel mittels einer linearen Schiebebewegung in Eingriff gebracht werden. Dazu sind an dem Aufsatz 2 am Verbindungsabschnitt 14 ein hinterschnittenes Positionierungselement 40 und ein ebenfalls hinterschnittenes Anschlagelement 42 ausgebildet, was in den Fig. 6 und 7 zu erkennen ist.

Korrespondierend dazu ist am Verbindungsabschnitt 36 der Grundbacke 4 eine Einlaufschiene 44 mit einer Einlaufkontur 46, die Einsetzkontur 48 und einem Anschlag 50 ausgebildet. Somit bildet die Einlaufschiene 44 der Grundbacke 4 eine Führung des an dem Aufsatz 2 ausgebildeten Positionierungselements 40 und des Anschlagelements 42.

Schließlich ist auch bei diesem Ausführungsbeispiel eine Fixierungsanordnung mit einer federbelasteten, an dem Aufsatzkörper 6 angeordneten Kugel 28 und einer an der Grundbacke 4 ausgebildeten Vertiefung 28' für ein lösbares Fixieren der beschriebenen Verbindungsmittel in ihrer Eingriffsposition vorgesehen.

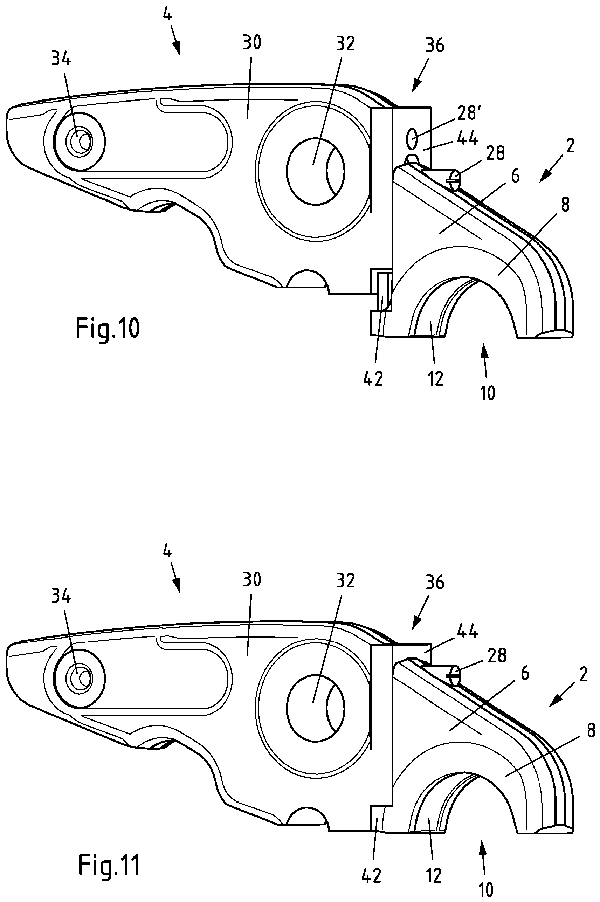

Die Fig. 10 und 11 zeigen das Verbinden des zuvor beschriebenen Aufsatzes 2 mit der korrespondierenden Grundbacke 4. Fig. 10 zeigt das Einsetzen des Aufsatzes 2 mit den Verbindungselementen 40 und 42, die nur teilweise zu erkennen sind, in die an der Grundbacke 4 ausgebildeten Führungsschiene 44. Dabei wird das Positionierungselement 40 durch die Einsetzkontur 48 hindurch geführt, während das Anschlagelement 42 mit der Einlaufkontur 46 in Kontakt gebracht wird. Nach dem Einsetzen wird der Aufsatz 2 linear zur Grundbacke 4 verschoben, um die in Fig. 11 gezeigte Position einzunehmen.

Fig. 12 zeigt ein System zum Verpressen von Fittings zur Herstellung von Rohrverbindungen mit drei Paaren von Aufsätzen 2 und mit einem Paar von Grundbacken 4. Die Grundbacken 4 sind mittels einer Halterung 60 und zweier Achsen 62 und 64 zu einer Pressbacke 66 zusammengesetzt und können von einem Presswerkzeug (nicht dargestellt) durch einen manuellen oder motorischen Antrieb angetrieben werden.

Verschiedene Paare von Aufsätzen 2 weisen Pressabschnitte 8 für Backenmäuler 10 mit unterschiedlichen Nennweiten auf und die Paare von Aufsätzen 2 weisen gleiche Verbindungsabschnitte 14 auf. Somit sind die Aufsätzen 2 geeignet, mit dem einen Paar von Grundbacken 4 verbunden zu werden.

Die Aufsätze 2 unterschiedlicher Paare von Aufsätzen weisen dann ein an die Nennweite der auszubildenden Backenmäuler 10 angepasste Baugröße und Außenkontur auf, die insbesondere für kleine Nennweiten zu geringen Baugrößen insbesondere im Bereich des distalen Abschnitts des Aufsatzkörpers 6 und im Bereich des Pressabschnittes 8 führen.

## Patentansprüche

1. Aufsatz für eine Grundbacke (4) eines Presswerkzeugs zum Verpressen von Fittings zur Herstellung von Rohrverbindungen,
- mit einem Aufsatzkörper (6),
- mit einem am Aufsatzkörper (6) ausgebildeten Pressabschnitt (8) für ein Ausbilden einer Hälfte eines Backenmauls (10) und
- mit einem am Aufsatzkörper (6) ausgebildeten Verbindungsabschnitt (14) zum Verbinden mit der Grundbacke (4),
- wobei der Pressabschnitt (8) und der Verbindungsabschnitt (14) beabstandet zueinander angeordnet sind,
- wobei der Verbindungsabschnitt (14) Verbindungsmittel für eine formschlüssige, verdrehsichere und lösbare Verbindung mit der Grundbacke (4) aufweist und
- wobei die Verbindungsmittel (14) mittels einer Drehbewegung in Eingriff mit den an der Grundbacke (4) ausgebildeten Verbindungsmitteln bringbar sind, **dadurch gekennzeichnet,**
- dass der Aufsatzkörper (6) den gesamten distalen Abschnitt der Grundbacke (4) bildet und
- dass der Verbindungsabschnitt (14) zumindest abschnittsweise eine im Wesentlichen ebene Schnittstelle komplementär zum distalen Verbindungsabschnitt (36) der Grundbacke (4) bildet.

2. Aufsatz nach Anspruch 1,
**dadurch gekennzeichnet,**
**dass** der Pressabschnitt (8) integral bzw. integriert mit dem Aufsatzkörper (6) ausgebildet ist.

3. Aufsatz nach Anspruch 1 oder 2,
**dadurch gekennzeichnet,**
**dass** die Pressfläche (12) des Pressabschnitts (8) einem Nennwert eines Außendurchmessers eines Fittings entspricht.

4. Aufsatz nach einem der Ansprüche 1 bis 3,
**dadurch gekennzeichnet,**
**dass** die Verbindungsmittel (14) eine zylindrische Vertiefung (16) zur Aufnahme eines an der Grundbacke (4) ausgebildeten zylindrischen Stiftes (18) oder einen zylindrischen Stift (18) aufweist.

5. Aufsatz nach einem der Ansprüche 1 bis 4,
**dadurch gekennzeichnet,**
**dass** die Verbindungsmittel (14) ein hinterschnittenes Positionierungselement (20) und ein Anschlagselement (22) aufweisen.

6. Aufsatz nach einem der Ansprüche 1 bis 5,
**dadurch gekennzeichnet,**
**dass** eine Fixierungsanordnung (26'; 28) für ein lösbares Fixieren der Verbindungsmittel (14) in der Eingriffsposition vorgesehen ist.

7. Grundbacke eines Presswerkzeugs zum Verpressen von Fittings zur Herstellung von Rohrverbindungen,
- mit einem Grundbackenkörper (30),
- mit einer gelenkartigen Aufnahme (32) für ein Verbinden mit einer weiteren Grundbacke und
- mit einen Wechselwirkungsabschnitt (34) für eine Wechselwirkung mit einem Presswerkzeug,
**dadurch gekennzeichnet,**
- **dass** ein distaler Verbindungsabschnitt (36) zum Verbinden mit einem Aufsatz (2) nach einem der Ansprüche 1 bis 6 und
- **dass** der Verbindungsabschnitt (36) zumindest abschnittsweise als eine im Wesentlichen ebene Schnittstelle komplementär zum Verbindungsabschnitt (14) des Aufsatzes (2) ausgebildet ist.

8. System zum Verpressen von Fittings zur Herstellung von Rohrverbindungen,
- mit mindestens zwei Paaren von Aufsätzen (2) nach einem der Ansprüche 1 bis 6 und
- mit einem Paar von Grundbacken (4) nach Anspruch 7,
- wobei verschiedene Paare von Aufsätzen (2) Pressabschnitte (8) für Backenmäuler (10) mit unterschiedlichen Nennweiten aufweisen und
- wobei die Paare von Aufsätzen (2) gleiche Verbindungsabschnitte (14) aufweisen.

9. System nach Anspruch 8,
**dadurch gekennzeichnet,**
**dass** die Aufsätze (2) unterschiedlicher Paare von Aufsätzen ein an die Nennweite der auszubildenden Backenmäuler (10) angepasste Baugröße und Außenkontur aufweisen.

## Claims

1. Attachment for a base jaw (4) of a pressing tool for pressing fittings to produce pipe connections, comprising
- an attachment body (6),
- a pressing section (8), formed on the attachment body (6), to form half a jaw opening (10), and
- a connecting section (14) formed on the attachment body (6), to connect to the base jaw (4),
- wherein the pressing section (8) and the connecting section (14) are arranged at a distance from one another,
- wherein the connecting section (14) has connection means for a form-fitting, twist-proof and releasable connection to the base jaw (4). and
- wherein the connection means (14) can be brought into engagement with the connection means formed on the base jaw (4) by a rotational movement, and **characterized in**
- **that** the attachment body (6) forms the complete distal section of the base jaw (4), and
- **that** the connecting section (14) forms a substantially planar interface, at least in sections, with the base jaw (4).

2. Attachment according to claim 1,
**characterized in**
**that** the pressing section (8) is formed integrally or in an integrated manner with the attachment body (6).

3. Attachment according to claim 1 or claim 2,
**characterized in**
**that** the pressing surface (12) of the pressing section (8) corresponds to a nominal value of an external diameter of a fitting.

4. Attachment according to any of claims 1 to 3,
**characterized in**
**that** the connection means (14) have a cylindrical cavity (16) for receiving a cylindrical pin (18), formed on the base jaw (4), or they have a cylindrical pin (18).

5. Attachment according to any of claims 1 to 4,
**characterized in**
**that** the connection means (14) have an undercut positioning element (20) and a limiting element (22).

6. Attachment according to any of claims 1 to 5,
**characterized in**
**that** a fixing arrangement (26, 26'; 28, 28') is provided for fixing the connection means (14) in a releasable manner in the engaged position.

7. Base jaw of a pressing tool for pressing fittings to produce pipe connections, comprising
- a base jaw body (30),
- an articulated seat (32) for a connection to a further base jaw, and
- an interaction section (34) for interaction with a pressing tool,
**characterized in**
- **that** a connecting section (36) is formed for a connection to an attachment (2) according to any of claims 1 to 6, and
- **that** the connecting section (36) is formed in a complementary manner to the connecting section (14) of the attachment (2).

8. System for pressing fittings to produce pipe connections, comprising
- at least two pairs of attachments (2) according to any of claims 1 to 6, and
- one pair of base jaws (4) according to claim 7,
- wherein different pairs of attachments (2) have pressing sections (8) for jaw openings (10) of different nominal widths, and
- wherein the pairs of attachments (2) have identical connecting sections (14).

9. System according to claim 8,
**characterized in**
**that** the attachments (2) of different pairs of attachments have an overall size and outer contour which is adapted to the nominal width of the jaw openings (10) to be formed.

## Revendications

1. Embout pour une mâchoire de base (4) d'un outil de pressage pour presser des raccords pour réaliser des connexions de tubes,
- avec un corps d'embout (6),
- avec une partie de pressage (8) formée au niveau du corps d'embout (6) pour former une moitié d'une gueule de mâchoire (10) et
- avec une partie de liaison (14) formée au niveau du corps d'embout (6) pour lier avec la mâchoire de base (4),
- la partie de pressage (8) et la partie de liaison (14) étant espacées l'une de l'autre,
- la partie de liaison (14) présentant des moyens de liaison pour une liaison par complémentarité de forme, résistante à la torsion et amovible avec la mâchoire de base (4) et
- les moyens de liaison (14) pouvant être amenés en prise avec les moyens de liaison formés au niveau de la mâchoire de base (4) au moyen d'un mouvement de rotation,
**caractérisé**
- **en ce que** le corps d'embout (6) forme la totalité de la partie distale de la mâchoire de base (4) et
- **en ce que** la partie de liaison (14) forme, au moins par parties, une interface sensiblement plane complémentaire de la partie de liaison distale (36) de la mâchoire de base (4).

2. Embout selon la revendication 1,
**caractérisé**
**en ce que** la partie de pressage (8) est formée de manière intégrale ou intégrée avec le corps d'embout (6).

3. Embout selon la revendication 1 ou 2,
**caractérisé**
**en ce que** la surface de pressage (12) de la partie de pressage (8) correspond à une valeur nominale d'un diamètre extérieur d'un raccord.

4. Embout selon l'une des revendications 1 à 3,
**caractérisé**
**en ce que** les moyens de liaison (14) présentent un renfoncement cylindrique (16) pour recevoir une tige cylindrique (18) formée au niveau de la mâchoire de base (4) ou une tige cylindrique (18).

5. Embout selon l'une des revendications 1 à 4,
**caractérisé**
**en ce que** les moyens de liaison (14) présentent un élément de positionnement (20) en contre-dépouille et un élément de butée (22).

6. Embout selon l'une des revendications 1 à 5,
**caractérisé**
**en ce qu'**un agencement de fixation (26'; 28) est prévu pour une fixation amovible des moyens de liaison (14) dans la position d'engagement.

7. Mâchoire de base d'un outil de pressage pour presser des raccords pour la réalisation de liaisons de tubes,
- avec un corps de mâchoire de base (30),
- avec un logement (32) de type articulé pour une liaison avec une mâchoire de base additionnelle et
- avec une partie d'interaction (34) pour une interaction avec un outil de pressage,
**caractérisée**
- **en ce qu'**une partie distale de liaison (36) pour liaison à un embout (2) selon l'une quelconque des revendications 1 à 6, et
- **en ce que** la partie de liaison (36) est réalisés, au moins par parties, sous la forme d'une interface sensiblement plane complémentaire à la partie de liaison (14) de l'embout (2).

8. Système de pressage de raccords pour la réalisation de liaisons de tubes,
- avec au moins deux paires d'embouts (2) selon l'une des revendications 1 à 6 et
- avec une paire de mâchoires de base (4) selon la revendication 7,
- où différentes paires d'embouts (2) présentent des parties de pressage (8) pour des gueules de mâchoires (10) de différentes largeurs nominales et
- où les paires d'embouts (2) présentent des parties de liaison (14) identiques.

9. Système selon la revendication 8,
**caractérisé**
**en ce que** les embouts (2) de différentes paires d'embouts présentent une taille et un contour extérieur adaptés à la largeur nominale des gueules de mâchoires (10) à former.
